Europäisches Patentamt

European Patent Office

Office européen des brevets

(11) Veröffentlichungsnummer: **0 261 742**
**A1**

## (12) EUROPÄISCHE PATENTANMELDUNG

(21) Anmeldenummer: 87201825.4

(22) Anmeldetag: 22.09.87

(51) Int. Cl.4: **C03B 37/018**

(30) Priorität: 26.09.86 DE 3632684

(43) Veröffentlichungstag der Anmeldung:
30.03.88 Patentblatt 88/13

(84) Benannte Vertragsstaaten:
DE FR GB

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB**

(72) Erfinder: **Rau, Hans, Prof. Dr.**
**Brunnenstrasse 11**
**D-5100 Aachen(DE)**
Erfinder: **De Jongh, Petrus Franciscus**
**Platteelstraat 22**
**NL-5504 GW Veldhoven(NL)**

(74) Vertreter: **Piegler, Harald, Dipl.-Chem. et al**
**Philips Patentverwaltung GmbH**
**Wendenstrasse 35 Postfach 10 51 49**
**D-2000 Hamburg 1(DE)**

(54) Verfahren und Vorrichtung zum Innenbeschichten von Rohren.

(57) Beim Innenbeschichten eines Rohres aus einem elektrisch isolierenden Material mit einem zweiten elektrisch isolierenden Material durch reaktive Abscheidung des zweiten elektrisch isolierenden Materials aus einem Gasgemisch, das durch das Rohr hindurchgeführt wird, wird die Abscheidung durch ein Plasma aktiviert, das durch Mikrowellen erzeugt und in dem Rohr hin-und herbewegt wird. Ein Verfahren mit niedrigem Energieverbrauch und eine Vorrichtung einfacher Konstruktion werden dadurch ermöglicht, daß das Plasma durch TE 011-Resonanz in einem zylindrischen Resonator angeregt wird.

FIG.1

## Verfahren und Vorrichtung zum Innenbeschichten von Rohren

Die Erfindung betrifft ein Verfahren zum Innenbeschichten eines Rohres aus einem elektrisch isolierenden Material mit einem zweiten elektrisch isolierenden Material durch reaktive Abscheidung des zweiten elektrisch isolierenden Materials aus einem Gasgemisch, das durch das Rohr hindurchgeführt wird, wobei die Abscheidung durch ein in dem Rohr hin-und herbewegtes, durch Mikrowellen erzeugtes Plasma aktiviert wird.

Ferner betrifft die Erfindung eine Vorrichtung zum Innenbeschichten eines Rohres aus einem elektrisch isolierenden Material mit einem zweiten elektrisch isolierenden Material durch reaktive Abscheidung des zweiten elektrisch isolierenden Materials aus einem Gasgemisch, das durch das Rohr hindurchgeführt wird, wobei die Vorrichtung ein Gaszufuhrsystem zum Zuführen des Gasgemisches zu dem Rohr, einen Mikrowellengenerator und einen zylindrischen Mikrowellenresonator zum Erzeugen und Aufrechterhalten eines Plasmas in dem Gasgemisch in dem Rohr, Mittel zum Hin-und Herbewegen des Plasmas in der Längsrichtung des Rohres und Mittel zum Erhitzen des Rohres enthält.

Ein Verfahren und eine Vorrichtung dieser Art sind u.a. aus Appl.Phys.Lett. 28 (1976) 645-646 und Topics in Current Chemistry 89 (1980) 107-131 bekannt. In diesen Dokumenten ist die Herstellung von Lichtleitfasern nach dem PCVD-Verfahren beschrieben. Bei diesem Verfahren wird als zweites elektrisch isolierendes Material lichtführendes Material mit Hilfe des Plasmas aus dem flüchtige Ausgangsmaterialien enthaltenden Gasgemisch auf der Innenseite des Rohres abgeschieden. Das Rohr besteht entweder aus synthetisch hergestelltem oder aus aus Quarzkristallen durch Schmelzen hergestelltem amorphem Quarz (Schmelzkieselsäure, Quarzglas), der gegebenenfalls dotiert ist, oder sowohl aus synthetisch hergestelltem als auch aus aus Quarzkristallen durch Schmelzen hergestelltem amorphem Quarz (Schmelzkieselsäure, Quarzglas), der gegebenenfalls dotiert ist. Das Rohr wird, nachdem eine dem beabsichtigten Lichtleitfaseraufbau entsprechende Menge lichtführendes Material abgeschieden worden ist, zum Kollabieren gebracht, um eine massive Vorform zu bilden, von der Lichtleitfasern gezogen werden.

Wie in den angeführten Dokumenten näher ausgeführt wird, sind für die Abscheidung haftender Schichten aus lichtführendem Material Temperaturen der Wand des Rohres zwischen 1100 und 1300°C erforderlich. Um diese Temperaturen während der Beschichtung zu gewährleisten, werden Öfen als zusätzliche Energiequellen eingesetzt. Als Ausführungsformen kommen sowohl bewegliche Öfen, die synchron mit dem Mikrowellenresonator über dem zu beschichteten Rohr verschoben werden, als auch ein statisches Ofenkonzept, bei dem sich der gekühlte Mikrowellenresonator innerhalb eines Ofens über dem zu beschichtenden Rohr verschieben läßt, in Frage.

In beiden Fällen bewegt sich der Mikrowellenresonator, in dem das Plasma erzeugt wird, längs eines Quarzglasrohres hin und her. Wegen der relativ niedrigen Temperatur findet die Abscheidung der dotierten Quarzglasschichten nur im Bereich des Plasmas statt; der Einfluß einer etwaigen thermisch angeregten Reaktion ist vernachlässigbar klein. Die beiden Arbeitsweisen unterscheiden sich durch die Art und Weise, auf die die notwendige Abscheidungstemperatur von vorzugsweise etwa 1200 bis 1260°C aufrechterhalten wird.

Im erstgenannten Fall bewegen sich zwei Öfen, die an dem Resonator angeflanscht sind, mit diesem zusammen über dem Rohr. Dabei ist das Rohr so lang zu machen, daß die beiden Öfen auch noch in den Extrempositionen die Einspannungen des Rohres nicht unzulässig erwärmen, weil diese vakuumdicht sein und bleiben müssen. Daher muß das Quarzglasrohr mindestens dreimal so lang sein wie die eigentliche Abscheidungszone. Dies erfordert viel Platz und verursacht zusätzliche Kosten.

Bei der zweiten Ausführungsform wird ein stationärer Ofen verwendet, in welchem sich ein gegebenenfalls gekühlter Resonator bewegt. Zwar ist hier die Abscheidungslänge nur unwesentlich kürzer als die Rohrlänge, aber der stationäre Ofen muß einen beträchtlichen Innenraum haben und ist dementsprechend groß und teuer. Seine elektrische Anschlußleistung beträgt z.B. mehr als 20 kW. Die Länge des Resonators entspricht etwa einer halben Vakuumwellenlänge. In diesem Mikrowellenresonator wird eine etwas modifizierte coaxiale Mode verwendet, bei der die elektrischen Feldlinien radial verlaufen.

Es hat sich nun herausgestellt, daß bei diesem Resonator durch die axialen Bohrungen Mikrowellenenergie herausleckt. Dies hat den Nachteil, daß Abschirmungsmaßnahmen ergriffen werden müssen, um die außerhalb der Vorrichtung meßbare Mikrowellenenergie unterhalb zulässiger Grenzen zu halten.

Ein weiterer Nachteil dieses Resonators ist durch seine Dimensionen gegeben. Obwohl alleine die TEM-Grundmode angeregt sein sollte, sind bei den gegebenen Dimensionen höhere Moden bereits möglich (z.B. die TE 11-Coaxialleitermode), die bei Anregung eine Abweichung von der Rotationssymmetrie der Feldverteilung bewirken. Wenn derartige Moden vermieden werden sollen, etwa um eine asymmetrische Abscheidung zu vermeiden, müßte der mittlere Durchmesser D des Resonators

$$(D = \frac{D_i + D_a}{2},$$

wobei $D_i$ und $D_a$ innerer bzw. äußerer Durchmesser bedeuten) die Bedingung $D \leq \frac{\lambda}{\pi}$ erfüllen, wobei $\lambda$ die Vakuumwellenlänge ist.

Bei 2,45 GHz ist $\lambda = 12,24$ cm und somit $\frac{\lambda}{\pi} = 3,9$. Bei $D_i = 7,1$ cm und $D_a = 3,1$ cm ist D jedoch schon 5,1 cm. Eine Vergrößerung des Durchmessers des Resonators, etwa für größere Rohrdurchmesser, ist mit Risiken verbunden. Auch müßte ein stationärer Ofen dann noch größer sein, als er heute schon ist.

Aufgabe der Erfindung ist es, zum Innenbeschichten von Rohren ein Verfahren mit niedrigem Energieverbrauch und eine Vorrichtung einfacher Konstruktion anzugeben.

Diese Aufgabe wird erfindungsgemäß dadurch gelöst, daß bei einem Verfahren der eingangs genannten Art das Plasma durch TE 011-Resonanz in einem zylindrischen Resonator angeregt wird.

Ferner wird diese Aufgabe erfindungsgemäß dadurch gelöst, daß bei einer Vorrichtung der eingangs genannten Art das Verhältnis von Durchmesser zu Höhe des Mikrowellenresonators durch die TE 011-Resonanz im Mikrowellenresonator bestimmt ist.

Die Wahl des Verhältnisses von Durchmesser zu Höhe des Mikrowellenresonators zwecks Erzeugung einer Resonanz einer bestimmten Mode und eines bestimmten Wellentyps, im Falle der Erfindung also der TE 011-Resonanz, erfolgt anhand der in H. Meinke, F.W. Gundlach "Taschenbuch der Hochfrequenztechnik" 2. Aufl. (Berlin/Göttingen/Heidelberg 1962) S. 461-464 und H. Püschner "Wärme durch Mikrowellen" (Eindhoven 1964) S. 198-201 angegebenen Formeln und Diagramme. Dies wird weiter unten an einem Beispiel erläutert.

Ein Resonator der TE 011-Mode schwingt in einer Mode, bei der die elektrischen Feldlinien konzentrisch angeordnet sind. Er regt also keine coaxialen Moden an. Daher können auch die axialen Bohrungen in diesem Resonator, der sowieso viel größer ist als der zuvor erwähnte coaxiale Resonator, wesentlich größer gemacht werden, ohne daß ein Auslecken der Mikrowellen auftritt. So konnte z.B. bei einem Bohrungsdurchmesser von 5 cm am Ausgang der Bohrungen praktisch keine Mikrowellenenergie gemessen werden, wenn im Resonator ein Plasma mit 500 W Leistung erzeugt wurde.

Ein derartiger Resonator bietet nun die Möglichkeit, den stationären Ofen durch die Bohrungen hindurchzuschieben und den Resonator außerhalb des Ofens hin und her zu bewegen.

In einer Ausführungsform liegt der Ofen nur in Form eines wärmeisolierten Rohres vor, in welchem das zu beschichtende Quarzglasrohr steckt. Die absorbierte Mikrowellenleistung muß dann ausreichend sein, das Quarzglasrohr auf etwa 1200 bis 1260°C zu erwärmen (während einer kontinuierlichen schnellen Hin-und Herbewegung). Dazu sind, wie Versuche ergeben haben, bei einem Ofen in Form eines Quarzglasrohres von 2,6 cm Innendurchmesser und 80 cm Gesamtlänge mit einer darauf befestigten handelsüblichen Isolation bis auf knapp 5,0 cm Gesamtdurchmesser etwa 1,2 kW absorbierte Mikrowellenleistung erforderlich.

Eine weitere Möglichkeit ist durch eine teilweise Beheizung des Ofens gegeben, etwa mit Hilfe einer elektrischen Heizwicklung, wobei dann nur der Rest der erforderlichen Wärmeenergie durch Absorption von Mikrowellenleistung aufzubringen ist.

Die Zündung des Plasmas ist beim TE 011-Resonator viel leichter als beim coaxialen Typ; meistens zündet das Plasma beim Einschalten des Resonators von alleine. Die Güte Q des Resonators ist wesentlich höher als bei dem coaxialen Typ, daher ist eine Nachführung der Resonanzfrequenz nötig, wenn sich Parameter ändern (z.B. Temperatur des Quarzglasrohres und Druck im Plasma). Diese Nachführung erfolgt vorzugsweise automatisch mit Hilfe einer elektronischen Regelung, die eine der beiden Endplatten des Resonators hinein- oder herausschraubt. Die Resonanzfrequenz hängt, wie bereits erwähnt, von der Gesamtlänge des inneren Resonanzraumes ab. Dafür wurde an einer der Endplatten eine Zahnscheibe angeflanscht, die über einen elektronisch geregelten Motor angetrieben wird. So ist es möglich, den Betrieb des Resonators bei einer gewünschten reflektierten Leistung nahe beim Reflektionsminimum stabil zu betreiben.

Die Erfindung ermöglicht es, einen stationären Ofen zu verwenden, bei dem die Abscheidungslänge nur unwesentlich kürzer als die Rohrlänge ist.

Ein Ausführungsbeispiel der Erfindung ist in einer Zeichnung dargestellt und wird im folgenden näher erläutert. In der Zeichnung zeigen

Fig. 1 einen über einem Wärmeisolationsrohr beweglichen Resonator schematisch im Schnitt und

Fig. 2 das Wärmeisolationsrohr schematisch im Schnitt senkrecht zu seiner Achse.

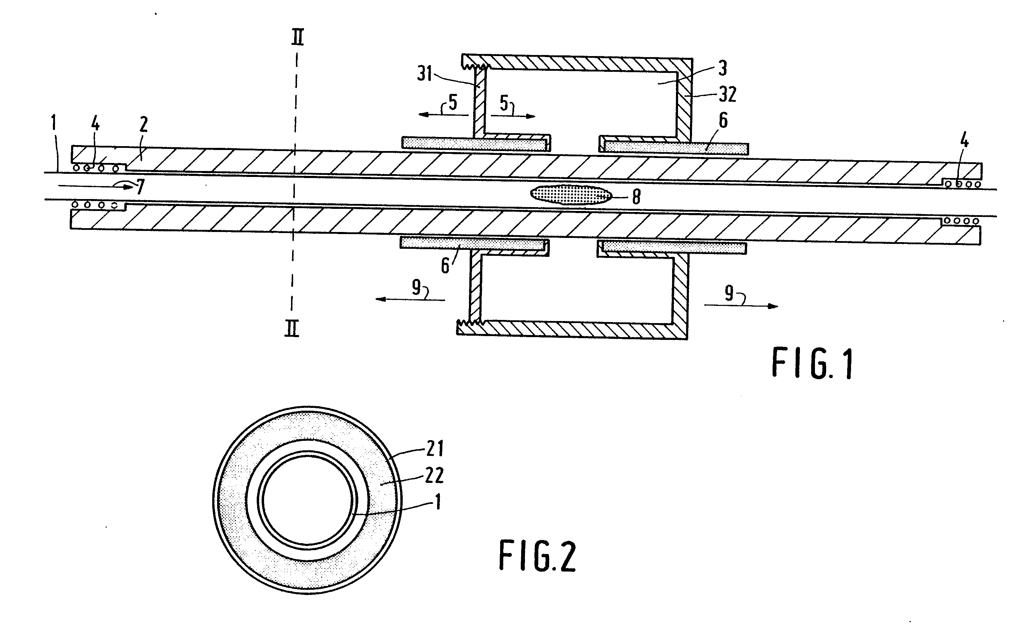

In Fig. 1 ist ein zu beschichtendes Quarzglasrohr 1 von einem Wärmeisolationsrohr 2 umgeben, über dem sich ein TE 011-Resonator 3 hin-und herbewegen kann. An den Enden des Isolationsrohres 2 können zusätzlich Heizungen 4 vorgesehen werden, um den Temperaturabfall an den Umkehrpunkten der Resonatorbewegung auszugleichen und eine optimale Temperaturverteilung längs des zu beschichtenden Quarzglasrohres 1 zu gewährleisten.

Der TE 011-Resonator hat eine bewegliche Wandfläche 31, die zur Abstimmung der Resonanzfrequenz auf die Betriebsfrequenz verschoben werden kann. Das geschieht z.B. durch einen nicht gezeigten elektrischen Motor, der die Wandfläche 31 in einen feststehenden Teil 32 des Resonators hinein-oder herausschraubt. Dabei wird der Motor so gesteuert, daß auf eine bestimmte reflektierte Mikrowellenleistung geregelt wird. Dieses Hinein- oder Herausschrauben ist durch Pfeile 5 angedeutet.

In die Metallteile 31 und 32 eingesetzte Graphitrohre 6 sollen die sonst eventuell aus dem Resonator ausleckende Mikrowellenleistung absorbieren und daher die außerhalb der Anordnung meßbare Energiedichte des Mikrowellenfeldes unter zulässige Grenzen senken.

Fig. 2 zeigt eine geeignete Ausführungsform des Wärmeisolationsrohres 2 im Querschnitt. Es erwies sich als notwendig, daß dieses Rohr an der Außenseite gerade und maßhaltig ist, um die Bewegung des Resonators nicht zu behindern. Daher wird es zweckmäßig zweischalig aufgebaut. In ein Quarzglasrohr 21 von z.B. 4,9 cm Außendurchmesser wird Isolationsmaterial 22 eingearbeitet. Das Isolationsmaterial wird im Inneren mit einer Bohrung versehen, so daß das zu beschichtende Quarzglasrohr 1 hindurchpaßt. Das Wärmeisolationsrohr 2 sollte keine nennenswerte Absorption von Mikrowellenenergie zeigen.

Dies ist mit handelsüblichen Materialien, z.B. Fiberfrax (Carborundum Werke GmbH) gewährleistet.

Beim Betrieb der Vorrichtung nach Fig. 1 wird ein Gasgemisch, das z.B. aus $SiCl_4$, Sauerstoff und einem Chlorid eines Dotiermaterials besteht, in das Quarzglasrohr 1 eingeleitet, was durch einen Pfeil 7 angedeutet ist. Durch die Mikrowellen im Resonator 3 wird ein Plasma 8 erzeugt. Die Hin-und Herbewegung des Resonators wird durch Pfeile 9 angedeutet. Die vom Plasma absorbierte Mikrowellenenergie, die sich durch die Differenz zwischen eingestrahlter und reflektierter Mikrowellenenergie ergibt, wird so eingestellt, daß sich die Temperatur einstellt, die für eine einwandfreie Beschichtung der Innenseite des Quarzglasrohres 1 durch Abscheidung von Glas aus dem Gasgemisch notwendig ist.

## Ansprüche

1. Verfahren zum Innenbeschichten eines Rohres aus einem elektrisch isolierenden Material mit einem zweiten elektrisch isolierenden Material durch reaktive Abscheidung des zweiten elektrisch isolierenden Materials aus einem Gasgemisch, das durch das Rohr hindurchgeführt wird, wobei die Abscheidung durch ein in dem Rohr hin-und herbewegtes, durch Mikrowellen erzeugtes Plasma aktiviert wird, dadurch gekennzeichnet, daß das Plasma durch TE 011-Resonanz in einem zylindrischen Resonator angeregt wird.

2. Vorrichtung zum Innenbeschichten eines Rohres aus einem elektrisch isolierenden Material mit einem zweiten elektrisch isolierenden Material durch reaktive Abscheidung des zweiten elektrisch isolierenden Materials aus einem Gasgemisch, das durch das Rohr hindurchgeführt wird, wobei die Vorrichtung ein Gaszufuhrsystem zum Zuführen des Gasgemisches zu dem Rohr, einen Mikrowellengenerator und einen zylindrischen Mikrowellenresonator zum Erzeugen und Aufrechterhalten eines Plasmas in dem Gasgemisch in dem Rohr, Mittel zum Hin-und Herbewegen des Plasmas in der Längsrichtung des Rohres und Mittel zum Erhitzen des Rohres enthält, dadurch gekennzeichnet, daß das Verhältnis von Durchmesser zu Höhe des Mikrowellenresonators durch die TE 011-Resonanz im Mikrowellenresonator bestimmt ist.

FIG.1

FIG.2

0 261 742

PHD 86-14.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 173 659 (STIFTELSEN INSTITUTET FÖR MIKROVÄGSTEKNIK VID TEKNISKA HÖGSKOLANI) * Insgesamt * | 1,2 | C 03 B 37/018 |
| X | FR-A-2 575 151 (ETAT FRANCAIS) * Insgesamt * | 1,2 | |
| A | GB-A-2 149 779 (THE GENERAL ELECTRIC CO.) * Insgesamt * | 1,2 | |
| P,X | EP-A-0 216 739 (STIFTELSEN INSTITUTET FÖR MIKROVÄGSTEKNIK VID TEKNISKA HÖGSKOLANI) * Insgesamt * | 1,2 | |
| A | US-A-4 292 063 (ABE) * Insgesamt * | 1,2 | RECHERCHIERTE SACHGEBIETE (Int. Cl.4) C 03 B 37/00 C 03 C 17/00 |

Der vorliegende Recherchenbericht wurde für alle Patentansprüche erstellt.

| Recherchenort | Abschlußdatum der Recherche | Prüfer |
|---|---|---|
| DEN HAAG | 21-10-1987 | VAN DEN BOSSCHE W.L. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82